(19) Europäisches Patentamt / European Patent Office / Office européen des brevets

(11) **EP 4 021 058 A1**

(12) **EUROPEAN PATENT APPLICATION**
published in accordance with Art. 153(4) EPC

(43) Date of publication:
**29.06.2022 Bulletin 2022/26**

(51) International Patent Classification (IPC):
***H04W 24/00*** (2009.01)

(21) Application number: **20865716.3**

(86) International application number:
**PCT/CN2020/113281**

(22) Date of filing: **03.09.2020**

(87) International publication number:
**WO 2021/052187 (25.03.2021 Gazette 2021/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.09.2019  CN 201910882078**

(71) Applicant: **GUANGDONG OPPO MOBILE TELECOMMUNICATIONS CORP., LTD.**
**Dongguan, Guangdong 523860 (CN)**

(72) Inventor: **PENG, Dongwei**
**Dongguan, Guangdong 523860 (CN)**

(74) Representative: **Penza, Giancarlo**
**Bugnion S.p.A.**
**Viale Lancetti, 17**
**20158 Milano (IT)**

(54) **FRAME LOSS PROCESSING METHOD AND APPARATUS BASED ON ULTRASONIC WAVE, AND MOBILE TERMINAL AND STORAGE MEDIUM**

(57)     Disclosed are a frame loss processing method and apparatus based on an ultrasonic wave, and a mobile terminal and a storage medium, wherein same relate to the technical field of mobile terminals. The method is applied to a mobile terminal. The mobile terminal comprises an ultrasonic wave receiving module and an ultrasonic wave proximity calculation module. The method comprises: receiving ultrasonic wave data by means of an ultrasonic wave receiving module, and transmitting the ultrasonic wave data to an ultrasonic wave proximity calculation module; acquiring the load rate of a mobile terminal, and acquiring the frame loss rate during the process of the ultrasonic wave data being transmitted from the ultrasonic wave receiving module to the ultrasonic wave proximity calculation module; and determining a parameter adjustment mode on the basis of the load rate and the frame loss rate, and adjusting the system efficiency of the mobile terminal on the basis of the parameter adjustment mode, so that the frame loss rate is less than a target frame loss rate. In the embodiments of the present application, the system efficiency is intelligently adjusted according to the load rate and the frame loss rate of a mobile terminal, so as to reduce the frame loss rate, thereby improving the user experience.

FIG. 3

## Description

CROSS-REFERENCE TO RELATED APPLICATION

This application claims priority to a Chinese application No. 201910882078.3 filed on September 18, 2019. The entirety of the Chinese application is hereby incorporated by reference herein.

TECHNICAL FIELD

The present disclosure relates to the technical field of mobile terminals, and particularly to a method and apparatus for processing frame loss of an ultrasonic wave, a mobile terminal and a storage medium.

BACKGROUND

With the popularity of the full-screen design of a mobile terminal, more and more manufacturers adopt the ultrasonic technique for proximity detection in the mobile terminals to replace the existing infrared technique for proximity detection, in order to save the top space of the mobile terminals.

SUMMARY

In view of above, a method and apparatus for processing frame loss of an ultrasonic wave, a mobile terminal and a storage medium are provided by embodiments of the present disclosure, to alleviate the above problem.

In a first aspect, a method for processing frame loss of an ultrasonic wave is provided in the embodiments of the present disclosure. The method is applied to a mobile terminal. The mobile terminal includes an ultrasonic receiving module and an ultrasonic proximity-calculating module. In the method, the ultrasonic receiving module receives ultrasonic data of the ultrasonic wave and transmits the received ultrasonic data to the ultrasonic proximity-calculating module. A load rate of the mobile terminal is acquired, and a frame loss rate of the ultrasonic data in a transmission process of transmitting the ultrasonic data from the ultrasonic receiving module to the ultrasonic proximity-calculating module is acquired. A parameter adjustment mode is determined based on the load rate and the frame loss rate, and system efficiency of the mobile terminal is adjusted based on the determined parameter adjustment mode, to cause the frame loss rate to be less than a target frame loss rate.

In a second aspect, an apparatus for processing frame loss of an ultrasonic wave is provided in the embodiments of the present disclosure. The apparatus is applied to a mobile terminal. The mobile terminal includes an ultrasonic receiving module and an ultrasonic proximity-calculating module. The apparatus includes an ultrasonic data transmitting module, a data acquiring module, and a parameter adjustment mode determining module. The ultrasonic data transmitting module is configured to receive, through the ultrasonic receiving module, the ultrasonic data of the ultrasonic wave, and transmit the received ultrasonic data to the ultrasonic proximity-calculating module. The data acquiring module is configured to acquire a load rate of the mobile terminal, and acquire a frame loss rate of the ultrasonic data in the transmission process of transmitting the ultrasonic data from the ultrasonic receiving module to the ultrasonic proximity-calculating module. The parameter adjustment mode determining module is configured to determine a parameter adjustment mode based on the load rate and the frame loss rate, and adjust system efficiency of the mobile terminal based on the determined parameter adjustment mode, to cause the frame loss rate to be less than a target frame loss rate.

In a third aspect, a mobile terminal is provided in the embodiments of the present disclosure. The mobile terminal includes an ultrasonic transmitting module, an ultrasonic proximity-calculating module, a memory, and a processor. The ultrasonic transmitting module, the ultrasonic proximity-calculating module, and the memory are all coupled to the processor. The memory stores instructions therein, and the instructions, when being executed by the processor, cause the processor to implement the above method.

In a fourth aspect, a computer-readable storage medium is provided in the embodiments of the present disclosure. The computer-readable storage medium stores program codes thereon, and the program codes are configured to be invoked by a processor to implement the above method.

BRIEF DESCRIPTION OF THE DRAWINGS

In order to clearly illustrate the technical solutions in the embodiments of the present disclosure, drawings needed in the description of the embodiments will be briefly introduced below. Obviously, the drawings in the following description illustrates only some embodiments of the present disclosure, and those of ordinary skill in the art can also obtain other drawings according to these drawings without paying any creative work.

FIG. 1 is a schematic diagram illustrating a Doppler-effect provided in the embodiments of the present disclosure;
FIG. 2 is a schematic diagram illustrating transmission paths of an ultrasonic wave provided in the embodiments of the present disclosure;
FIG. 3 is a schematic flowchart of a method for processing frame loss of an ultrasonic wave provided in the embodiments of the present disclosure;
FIG. 4 is a schematic flowchart of another method for processing frame loss of an ultrasonic wave provided in the embodiments of the present disclosure;
FIG. 5 is a structural block diagram of an apparatus for processing frame loss of an ultrasonic wave provided in the embodiments of the present disclosure;
FIG. 6 is a structural block diagram of a mobile terminal that is configured to perform the above method for processing frame loss of an ultrasonic wave provided in the embodiments of the present disclosure; and
FIG. 7 is a structural block diagram of a storage unit storing or carrying program codes, where the program codes are configured to implement the above method for processing frame loss of an ultrasonic wave provided in the embodiments of the present disclosure.

## DETAILED DESCRIPTION OF PREFERRED EMBODIMENTS

In order to enable those skilled in the art to better understand the solutions of the present disclosure, these technical solutions in the embodiments of the present disclosure will be described below clearly and comprehensively with reference to the drawings in the embodiments of the present disclosure.

At present, with regard to proximity detection, the mobile terminals adopt techniques including: a slit infrared technique, a TP plus infrared technique, an ultrasonic technique, and a classical infrared technique. Among them, the classical infrared technique is substantially abandoned since it needs to occupy the space of a front screen of the mobile terminal. The slit infrared technique has high requirements on the structure which cannot be met generally, and thus this technique is also rarely used. The TP plus infrared technique has a recognition rate that needs to be improved, and has a poor anti-interference ability. The ultrasonic technique has been paid more attention and adopted due to the advantages of high anti-interference ability and high recognition rate.

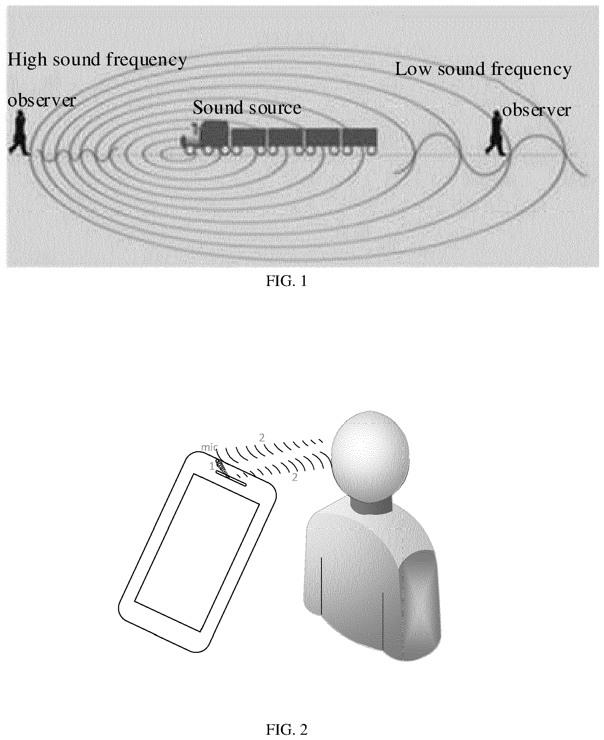

For the proximity detection with the ultrasonic technique, ultrasonic signals are picked up from an ultrasonic wave through a microphone, and are transmitted to a recognition module for processing. The recognition module uses continuous ultrasonic signals as the basis for proximity detection. Specifically, the mobile terminal includes both an ultrasonic transmitting module and an ultrasonic receiving module. When the ultrasonic transmitting module moves relative to an object, it is substantially a process that the mobile terminal moves relative to the object, accordingly, the ultrasonic receiving module also moves relative to the object. As shown in FIG. 1, a schematic diagram illustrating a Doppler effect provided in the embodiments of the present disclosure is illustrated. According to the Doppler effect, a wavelength radiated by an object changes due to a relative movement between a wave source (the mobile terminal) and an observer (the object), and the Doppler effect is indicated by a formula as follows:

$$f' = \left( \frac{v \pm v_0}{v \pm v_s} \right) f$$

where $f'$ is an observed frequency, f is an original transmit frequency of a transmitting source in a medium, $v$ is a transmission speed of the wave in the medium, $v_0$ is a movement speed of the observer, and $v_s$ is a movement speed of the transmitting source. If the observer moves towards the transmitting source, the operational sign in front of $v_0$ is "+"; and if the observer moves away from the transmitting source, the operational sign in front of $v_0$ is "-". If the object moves towards the observer, the operational sign in front of $v_s$ is "-"; and if the object moves away from the observer, the operational sign in front of $v_s$ is "+". According to the formula of the Doppler effect, when the transmitting source and the observer move towards each other, a signal frequency received by the observer is increased. When the transmitting source and the observer move away from each other, the signal frequency received by the observer is decreased. When the transmitting source and the observer are relatively stationary, the signal frequency received by the observer is the same as the transmitting source.

Referring to FIG. 2, a schematic diagram illustrating transmission paths of the ultrasonic wave provided in the embodiments of the present disclosure are illustrated. The ultrasonic wave can be transmitted by the mobile terminal with the ultrasonic transmitting module (such as, an earpiece, a speaker, a special-purpose ultrasonic transmitter). A part of the ultrasonic wave is transmitted, through the air, directly to the ultrasonic receiving module (such as a picker) (as shown by path 1 in FIG. 2), and another part of the ultrasonic wave is transmitted through the air and arrives at the ultrasonic receiver after being reflected by the object (as shown by path 2 in FIG. 2). A superposed signal of the direct wave part and the reflected wave part is picked up by the ultrasonic receiving module. The superposed signal is converted into an audio signal by an A/D converter, and the audio signal is processed by an algorithm to obtain operating movement state of the object relative to the mobile terminal, so as to instruct a display screen of the mobile terminal to be turned on or off.

However, in some special conditions, some frames would be lost in the mobile terminal due to an excessive load of the system, which affects the accuracy of recognizing the relative movement state between the mobile terminal and the object. In view of this, the inventor found that the system frequency and throughput can be set to be high as far as possible, to ensure that frame loss does not occur in most cases. But in some extreme scenarios, the frame loss still occurs. In addition, by setting fixed parameters only through experience, the frame loss may still happen if the parameters are set too small, and problems of resource waste and increased power consumption may be caused if the parameters are set too large. Therefore, for the above problems, the inventor proposes, through long-term research, the method and apparatus for processing frame loss of an ultrasonic wave, the mobile terminal, and the storage medium provided in the embodiments of the present disclosure, by which the system efficiency can be intelligently adjusted based on the load rate and the frame loss rate of the mobile terminal, to reduce the frame loss rate, thereby improving the user experience. The method for processing frame loss of an ultrasonic wave will be described in detail in the subsequent embodiments.

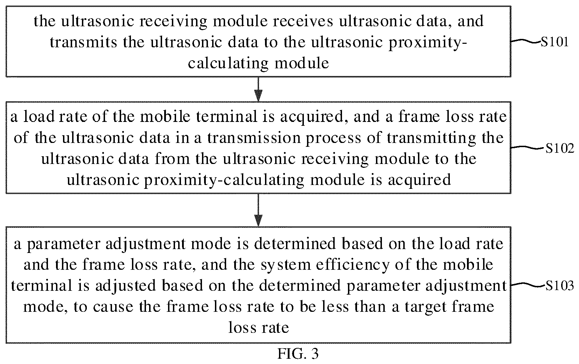

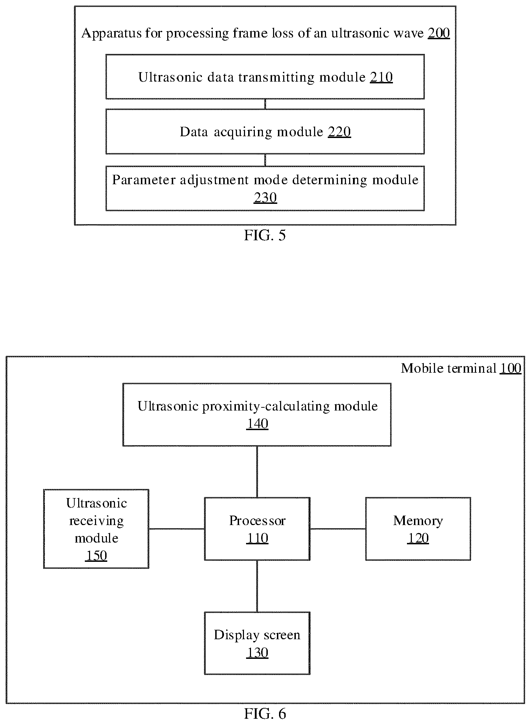

Referring to FIG. 3, a schematic flowchart of the method for processing frame loss of an ultrasonic wave provided in the embodiments of the present disclosure is illustrated. In the method for processing frame loss of an ultrasonic wave, the system efficiency can be intelligently adjusted based on the load rate and the frame loss rate of the mobile terminal, to reduce the frame loss rate, thereby improving the user experience. In some embodiments, the method for processing frame loss of an ultrasonic wave is applied to the apparatus 200 for processing frame loss of an ultrasonic wave as shown in FIG. 5 and the mobile terminal (FIG. 6) equipped with the apparatus 200 for processing frame loss of an ultrasonic wave. In the following, the process of the embodiments will be illustrated by taking the mobile terminal as an example. Of course, it is understandable that the mobile terminal involved in the embodiments may be a smart phone, a tablet computer, a wearable electronic device, etc., which is not limited herein. In the embodiments, the mobile terminal may include an ultrasonic receiving module and an ultrasonic proximity-calculating module. The process shown in FIG. 3 will be described in detail below. The method for processing frame loss of an ultrasonic wave may include the following operations.

In block S101, the ultrasonic receiving module receives ultrasonic data of the ultrasonic wave, and transmits the received ultrasonic data to the ultrasonic proximity-calculating module.

In some embodiments, the mobile terminal at least may include the ultrasonic receiving module and the ultrasonic proximity-calculating module. The ultrasonic receiving module may be configured to receive the ultrasonic data of the ultrasonic wave and transmit the received ultrasonic data to the ultrasonic proximity-calculating module. The ultrasonic proximity-calculating module is configured to perform calculation based on the received ultrasonic data. In the embodiments, the ultrasonic receiving module may receive the ultrasonic data in real time, at fixed times, at preset time intervals, or based on a user operation, etc., which are not limited here. As an implementation, when the ultrasonic receiving module receives the ultrasonic data based on the user operation, the mobile terminal may be provided with a switch. The switch can be operated by the user to control the ultrasonic receiving module to start or stop receiving the ultrasonic data. The switch may be a virtual button or a virtual control. The mobile terminal can cause, in response to a touch operation performed by the user on the virtual button or virtual control corresponding to the switch, the ultrasonic receiving module to start or stop receiving the ultrasonic data.

In some embodiments, the ultrasonic data received by the ultrasonic receiving module of the mobile terminal may include one of ultrasonic data of the ultrasonic wave that is returned by the object reflecting the ultrasonic wave transmitted by the ultrasonic transmitting module of the mobile terminal, ultrasonic data of the ultrasonic wave that is transmitted by the ultrasonic transmitting module of the mobile terminal and arrives directly through the air, and ultrasonic data of the ultrasonic wave existing in the environment where the mobile terminal is located, or a combination thereof. For example, the ultrasonic data received by the ultrasonic receiving module may include: the ultrasonic data of the ultrasonic wave that is transmitted by the ultrasonic transmitting module of the mobile terminal and returned after being reflected, the ultrasonic data of the ultrasonic wave that is transmitted by the ultrasonic transmitting module of the mobile terminal and arrives directly through the air, the ultrasonic data of the ultrasonic wave that is transmitted by the ultrasonic transmitting module of the mobile terminal and returned after being reflected, the ultrasonic data of the ultrasonic wave that arrives directly through air, and the ultrasonic data of the ultrasonic wave existing in the environment where the mobile terminal is located, etc., which is not limited here.

In block S102, a load rate of the mobile terminal is acquired, and a frame loss rate of the ultrasonic data in a transmission process of transmitting the ultrasonic data from the ultrasonic receiving module to the ultrasonic proximity-calculating module is acquired.

In some embodiments, the mobile terminal may include a system load detection module, and the system load detection module is mainly configured to detect an overall situation of the system. For example, the system load detection module may be configured to detect the load rate of the mobile terminal. The load rate of the mobile terminal may include a usage rate of a central processing unit of the mobile terminal and/or a usage rate of a memory of the mobile terminal, which is not limited here. In the embodiments, the load rate of the mobile terminal may be acquired and updated in real time, or may be acquired when the ultrasonic data is transmitted to the ultrasonic proximity-calculating module, which is not limited here.

In the embodiments, the ultrasonic receiving module and the ultrasonic proximity-calculating module are respectively in two different threads of the mobile terminal, and data exchange is performed between the ultrasonic receiving module and the ultrasonic proximity-calculating module. Therefore, during the process of transmitting the ultrasonic data from the ultrasonic receiving module to the ultrasonic proximity-calculating module, some frames may be lost, thereby affecting the calculation result of proximity detection performed by the ultrasonic proximity-calculating module. Therefore, in some embodiments, the mobile terminal may acquire the frame loss rate of the ultrasonic data in the transmission process of transmitting the ultrasonic data from the ultrasonic receiving module to the ultrasonic proximity-calculating module. The mobile terminal may acquire the frame loss rate of the ultrasonic date within a preset period of time in the transmission process of transmitting the ultrasonic data from the ultrasonic receiving module to the ultrasonic proximity-calculating module. For example, the frame loss rate of the ultrasonic data within 100ms in the transmission process of transmitting the ultrasonic data from the ultrasonic receiving module to the ultrasonic proximity-calculating module may be acquired. The frame loss rate of a preset number of frames of the ultrasonic data in the transmission process of transmitting the ultrasonic data from the ultrasonic receiving module to the ultrasonic proximity-calculating module may be acquired. For example, the frame loss rate of 100 frames of the ultrasonic data in the transmission process of transmitting the ultrasonic data from the ultrasonic receiving module to the ultrasonic proximity-calculating module may be acquired. The frame loss rate of all frames, which are received by the ultrasonic receiving module, of the ultrasonic data in the transmission process of transmitting the ultrasonic data from the ultrasonic receiving module to the ultrasonic proximity-calculating module may be acquired. For example, in the case where the ultrasonic receiving module receives 1000 frames of the ultrasonic data, the frame loss rate of the 100 frames of the ultrasonic data in the transmission process of transmitting the ultrasonic data from the ultrasonic receiving module to the ultrasonic proximity-calculating module may be acquired. The acquisition of the frame loss rate is not limited here.

In some embodiments, the load rate of the mobile terminal may be acquired first, and then the frame loss rate of the ultrasonic data in the transmission process of transmitting the ultrasonic data from the ultrasonic receiving module to the ultrasonic proximity-calculating module is acquired. Alternatively, the frame loss rate of the ultrasonic data in the transmission process of transmitting the ultrasonic data from the ultrasonic receiving module to the ultrasonic proximity-calculating module may be acquired first, and then the load rate of the mobile terminal is acquired. Alternatively, the load rate of the mobile terminal may be acquired simultaneously with the acquisition of the frame loss rate of the ultrasonic data in the transmission process of transmitting the ultrasonic data from the ultrasonic receiving module to the ultrasonic proximity-calculating module. The acquisition order of the load and the frame loss rate is not limited here.

In block S103, a parameter adjustment mode is determined based on the load rate and the frame loss rate, and the system efficiency of the mobile terminal is adjusted based on the determined parameter adjustment mode, to cause the frame loss rate to be less than a target frame loss rate.

In some embodiments, after the load rate of the mobile terminal and the frame loss rate of the ultrasonic data in the transmission process of transmitting the ultrasonic data from the ultrasonic receiving module to the ultrasonic proximity-calculating module are acquired, the parameter adjustment mode may be determined based on the load rate and the frame loss rate, and the system efficiency of the mobile terminal is adjusted based on the determined parameter adjustment mode, so that the frame loss rate is less than a target frame loss rate, thereby improving the accuracy of the proximity detection and the user experience. The system efficiency refers to the ability of the system to meet given quantitative characteristics and service requirements under specified conditions. The system efficiency is a comprehensive reflection of the availability, credibility and inherent capabilities of the system. In the embodiments, the target frame loss rate may be set in factory, or may be initially set in factory and sequentially updated during use. For example, during the use of the mobile terminal, the target frame loss rate may be set differently according to the different environments where the mobile terminal is located. The target frame loss rate may be set to 5%, 6%, etc., which is not limited here.

In some embodiments, the parameters reflecting the system efficiency of the mobile terminal and adjusted by the mobile terminal may include clock frequency and/or bandwidth. As an implementation, the clock frequency and/or bandwidth may be adjusted by the mobile terminal through an API interface provided by the system. The clock frequency and bandwidth may affect the data transmission rate of the mobile terminal. The greater the clock frequency and bandwidth are, the higher the data transmission rate is, and correspondingly, the higher the system efficiency of the mobile terminal is, and the smaller the frame loss rate of the system is. The smaller the clock frequency and bandwidth are, the lower the data transmission rate is, and correspondingly, the lower the system efficiency of the mobile terminal is, and the greater the frame loss rate of the system is.

The parameter adjustment mode may include: a mode of increasing the clock frequency and/or bandwidth of the mobile terminal, a mode of reducing the clock frequency and/or bandwidth of the mobile terminal, or a mode of keeping the clock frequency and/or bandwidth of the mobile terminal unchanged. Therefore, in the embodiments, the parameter adjustment mode may be determined, based on the load rate and the frame loss rate, as the mode of increasing the clock frequency and/or bandwidth of the mobile terminal. By increasing the clock frequency and/or bandwidth of the mobile terminal, the system efficiency of the mobile terminal is improved, so as to cause the frame loss rate to be less than the target frame loss rate. The parameter adjustment mode may be determined, based on the load rate and the frame loss rate, as the mode of reducing the clock frequency and/or bandwidth of the mobile terminal. By reducing the clock frequency and/or bandwidth of the mobile terminal, the system efficiency of the mobile terminal is reduced, so as to reduce power consumption of the mobile terminal while keeping the frame loss rate less than the target frame loss rate. The parameter adjustment mode may be determined, based on the load rate and the frame loss rate, as the mode of keeping the clock frequency and/or bandwidth of the mobile terminal unchanged. By keeping the clock frequency and/or bandwidth of the mobile terminal unchanged, the system efficiency of the mobile terminal is kept unchanged, so as to keep the frame loss rate to be less than the target frame loss rate.

In the method for processing frame loss of an ultrasonic wave provided in the embodiments of the present disclosure, the ultrasonic data of the ultrasonic wave is received by the ultrasonic receiving module, and the received ultrasonic data is transmitted to the ultrasonic proximity-calculating module. The load rate of the mobile terminal is acquired, and the frame loss rate of the ultrasonic data in the transmission process of transmitting the ultrasonic data from the ultrasonic receiving module to the ultrasonic proximity-calculating module is acquired. The parameter adjustment mode is determined based on the load rate and the frame loss rate, and the system efficiency of the mobile terminal is adjusted based on the determined parameter adjustment mode, so as to cause the frame loss rate to be less than the target frame loss rate. In this way, the system efficiency is intelligently adjusted based on the load rate and the frame loss rate of the mobile terminal, to reduce the frame loss rate, thereby improving the user experience.

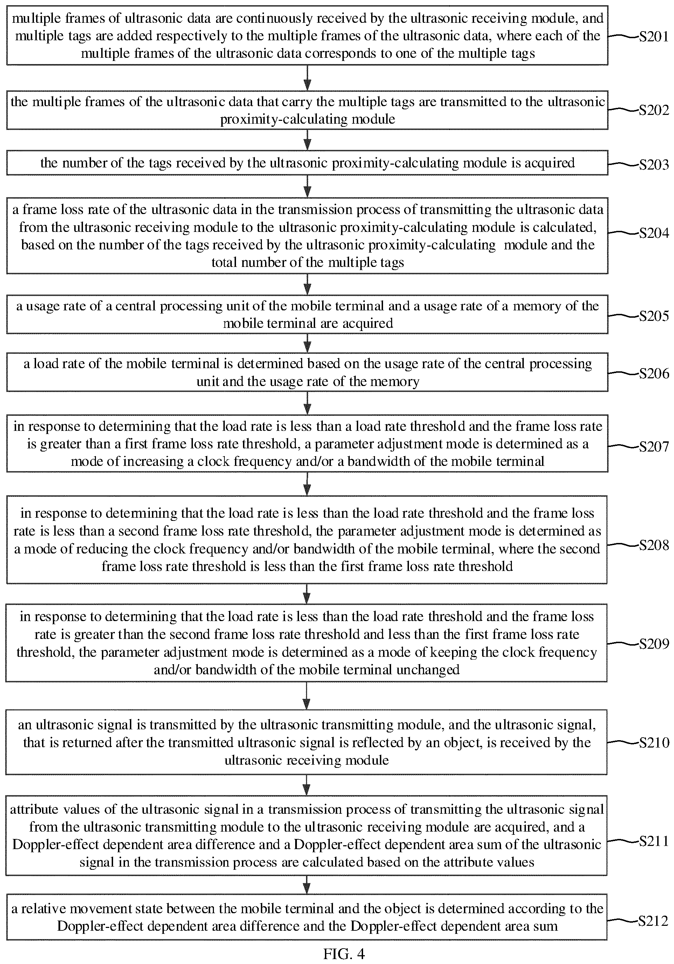

Referring to FIG. 4, a schematic flowchart of another method for processing frame loss of an ultrasonic wave provided in the embodiments of the present disclosure is illustrated. The method is applied to the mobile terminal mentioned above. The mobile terminal includes the ultrasonic receiving module, the ultrasonic proximity-calculating module, and an ultrasonic transmitting module. The process shown in FIG. 4 will be described in detail below. The method for processing frame loss of an ultrasonic wave may include the following operations.

In block S201, multiple frames of ultrasonic data of the ultrasonic wave are continuously received by the ultrasonic receiving module, and multiple tags are added respectively to the multiple frames of the ultrasonic data, where each of the multiple frames of the ultrasonic data corresponds to one of the multiple tags.

In some embodiments, the mobile terminal may continuously receive the multiple frames of the ultrasonic data of the ultrasonic wave through the ultrasonic receiving module, and add the multiple tags to the received multiple frames of the ultrasonic data. Each of the multiple frames of the ultrasonic data corresponds to one of the multiple tags, that is, each of the multiple frames of the ultrasonic data is added with one corresponding tag, and each tag is used to identify the corresponding frame of the ultrasonic data. For example, if the ultrasonic receiving module continuously receives 1000 frames of the ultrasonic data of the ultrasonic wave, 1000 tags can be added respectively to the 1000 frames of the ultrasonic data, and each of the 1000 frames of the ultrasonic data corresponds to one of the 1000 tags.

In the embodiments, the multiple tags may include one of a numerical tag, a character tag, a letter tag, and an image tag, or a combination thereof. The multiple tags may be different from each other, or part of the multiple tags may be the same, or all the multiple tags may be the same. When the multiple tags are different from each other, the multiple tags may be for example "1, 2, 3, ..., n", where n is the number of the frames of the ultrasonic data. When part of the multiple tags may be the same, the multiple tags may be for example "a, a, b, b, ..., m, m". When all the multiple tags are the same, the multiple tags may be for example "1, 1, 1, 1, ..., 1". The specific forms of the multiple tags are not limited here.

In block S202, the multiple frames of the ultrasonic data that carry the multiple tags are transmitted to the ultrasonic proximity-calculating module.

In some embodiments, after adding the tags to the multiple frames of the ultrasonic data received by the ultrasound receiving module, the mobile terminal may transmit the multiple frames of the ultrasonic data that carry the multiple tags to the ultrasonic proximity-calculating module.

In block S203, the number of the tags received by the ultrasonic proximity-calculating module is acquired.

In the embodiments, each of the frames of the ultrasonic data that are received by the ultrasonic proximity-calculating module carries one corresponding tag. Therefore, the number of the tags received by the ultrasonic proximity-calculating module can represent the number of frames of the ultrasonic data that are received by the ultrasonic proximity-calculating module. For example, if the ultrasonic proximity-calculating module receives 960 tags, it can indicate that the number of the frames of ultrasonic data that are received by the ultrasonic proximity-calculating module is 960. Therefore, in some embodiments, after the ultrasonic receiving module transmits the multiple frames of the ultrasonic data that carry the multiple tags, the number of the tags received by the ultrasonic proximity-calculating module can be acquired.

In block S204, a frame loss rate of the ultrasonic data in the transmission process of transmitting the ultrasonic data from the ultrasonic receiving module to the ultrasonic proximity-calculating module is calculated, based on the number of the tags received by the ultrasonic proximity-calculating module and the total number of the multiple tags.

In some embodiments, after acquiring the number of the tags received by the ultrasonic proximity-calculating module, the mobile terminal can calculate, based on the number of the tags received by the ultrasonic proximity-calculating module and the total number of the multiple tags, the frame loss rate of the ultrasonic data in the transmission process of transmitting the ultrasonic data from the ultrasonic receiving module to the ultrasonic proximity-calculating module. For example, if the ultrasonic receiving module continuously receives 1000 frames of the ultrasonic data of the ultrasonic wave, the number of the tags added by the mobile terminal for the 1000 frames of the ultrasonic data is 1000. If the ultrasonic proximity-calculating module receives 960 tags, the frame loss rate of the ultrasonic data in the transmission process of transmitting the ultrasonic data from the ultrasonic receiving module to the ultrasonic proximity-calculating module is (1000-960)/1000=4%.

In block S205, a usage rate of a central processing unit of the mobile terminal and a usage rate of a memory of the mobile terminal are acquired.

In some embodiments, the mobile terminal may detect the usage of the central processing unit to obtain information of the remaining resources of the central processing unit. For example, when the operating system of the mobile terminal is the Android system, the usage of the system and the process time can be acquired through ProcessStats in the Android system. Specifically, it is implemented by reading files in the /proc directory. In particular, when the system operates, the kernel updates the files in the /proc directory, and writes operation status of PID into the corresponding files; accordingly, information of the remaining resources of the center processing unit can be acquired according to such operating status. The information of the remaining resources of the central processing unit may include the remaining usage rate of the central processing unit, so that the usage rate of the central processing unit can be acquired based on the remaining usage rate of the central processing unit.

In some embodiments, the mobile terminal may detect the usage of the memory to obtain information of the remaining resources of the memory of the mobile terminal. For example, when the operating system of the mobile terminal is the Android system, the total amount of the memory of the mobile terminal can be acquired by reading information in a file "/proc/meminfo", and the currently available amount of the memory of the mobile terminal can be acquired through ActivityManager.getMemoryInfo (ActivityManager.MemoryInfo). Specifically, the "/proc/meminfo" file records some memory information of the android mobile terminal. By inputting "adb shell" into the command line window, the shell environment is entered. Then, by inputting "cat /proc/meminfo", the contents of the "meminfo" file can be displayed in the command line, thereby obtaining the memory information. It is understandable that, after the total amount and the currently available amount of memory of the mobile terminal are acquired in the above way, the usage rate of the memory of the mobile terminal can be calculated.

In block S206, a load rate of the mobile terminal is determined based on the usage rate of the central processing unit and the usage rate of the memory.

In the embodiments, after acquiring the usage rate of the central processing unit and the usage rate of the memory, the mobile terminal can determine the load rate of the mobile terminal based on the usage rate of the central processing unit and the usage rate of the memory. The load rate of the mobile terminal is positively correlated with the usage rate of the central processing unit and positively correlated with the usage rate of the memory.

Operations S203-S204 may be performed before operations S205-S206, or operations S203-S204 may be performed after operations S205-S206, or operations S203-S204 may also be performed synchronously with operations S205-S206, which are not limited here.

In block S207, in response to determining that the load rate is less than a load rate threshold and the frame loss rate is greater than a first frame loss rate threshold, a parameter adjustment mode is determined as a mode of increasing a clock frequency and/or a bandwidth of the mobile terminal.

In some embodiments, the load rate threshold may be preset in the mobile terminal, and the load rate threshold can be used as a criterion for the acquired load rate of the mobile terminal. Therefore, in the embodiments, after the load rate of the mobile terminal is acquired, the acquired load rate of the mobile terminal can be compared with the load rate threshold, to determine the relationship between the acquired load rate and the load rate threshold. In some embodiments, the first frame loss rate threshold may be preset and stored in the mobile terminal, and the first frame loss rate threshold is used as a criterion for the acquired frame loss rate of the ultrasonic data in the transmission process of transmitting the ultrasonic data from the ultrasonic receiving module to the ultrasonic proximity-calculating module. Therefore, in the embodiments, after the frame loss rate of the ultrasonic data in the transmission process of transmitting the ultrasonic data from the ultrasonic receiving module to the ultrasonic proximity-calculating module is acquired, the acquired frame loss rate can be compared with the first frame loss rate threshold, to determine the relationship between the acquired frame loss rate and the first frame loss rate threshold. For example, the load rate threshold may be 80%, and the first frame loss rate threshold may be 5%.

In the embodiments, when it is determined that the load rate is less than the load rate threshold and the frame loss rate is greater than the first frame loss rate threshold, this shows that the mobile terminal has a low load rate and a high frame loss rate. That is, the mobile terminal may bear more load. Therefore, the parameter adjustment mode can be determined as the mode of increasing the clock frequency and/or bandwidth of the mobile terminal, so as to improve the system efficiency of the mobile terminal and reduce the frame loss rate of the mobile terminal, thereby improving the accuracy of the proximity detection. When it is determined that the load rate is not less than the load rate threshold and the frame loss rate is greater than the first frame loss rate threshold, this shows that the mobile terminal has a high load rate and a high frame loss rate. In this case, if the clock frequency and/or bandwidth of the mobile terminal are increased for reducing the frame loss rate of the mobile terminal, the load rate of the mobile terminal will be increased, which will cause the mobile terminal to be stuck when the original load rate of the mobile terminal is high. Therefore, as an implementation, the mobile terminal may output a prompt message to prompt the user to adjust the operation of the mobile terminal, so as to reduce the load rate of the mobile terminal.

In block S208, in response to determining that the load rate is less than the load rate threshold and the frame loss rate is less than a second frame loss rate threshold, the parameter adjustment mode is determined as a mode of reducing the clock frequency and/or bandwidth of the mobile terminal, where the second frame loss rate threshold is less than the first frame loss rate threshold.

In some embodiments, the load rate threshold may be preset in the mobile terminal, and the load rate threshold can be used as a criterion for the acquired load rate of the mobile terminal. Therefore, in the embodiments, after the load rate of the mobile terminal is acquired, the acquired load rate of the mobile terminal can be compared with the load rate threshold, to determine the relationship between the acquired load rate and the load rate threshold. In some embodiments, the second frame loss rate threshold may be preset and stored in the mobile terminal, and the second frame loss rate threshold is used as a criterion for the acquired frame loss rate of the ultrasonic data in the transmission process of transmitting the ultrasonic data from the ultrasonic receiving module to the ultrasonic proximity-calculating module. Therefore, in the embodiments, after the frame loss rate of the ultrasonic data in the transmission process of transmitting the ultrasonic data from the ultrasonic receiving module to the ultrasonic proximity-calculating module is acquired, the acquired frame loss rate can be compared with the second frame loss rate threshold, to determine the relationship between the acquired frame loss rate and the second frame loss rate threshold. The second frame loss rate is less than the first frame loss rate. For example, the load rate threshold may be 90%, and the second frame loss rate threshold may be 1%.

In the embodiment, when it is determined that the load rate is less than the load rate threshold and the frame loss rate is less than the second frame loss rate threshold, this shows that the mobile terminal has a low load rate and a low frame loss rate, even no frame loss occurs. In this case, the system efficiency of the mobile terminal can be reduced appropriately, to save the system resources of the mobile terminal, and reduce the power consumption of the mobile terminal. Therefore, the parameter adjustment mode can be determined as the mode of reducing the clock frequency and/or bandwidth of the mobile terminal, to reduce the system efficiency of the mobile terminal, and reduce the power consumption of the mobile terminal. When it is determined that the load rate is not less than the load rate threshold and the frame loss rate is less than the second frame loss rate threshold, this shows that the mobile terminal has a high load rate and a low frame loss rate. In this case, if the system efficiency is reduced, the load of the mobile terminal will be increased rapidly, which would cause the mobile terminal to have a high load and even cause the mobile terminal to be stuck. Therefore, when it is determined that the load rate is not less than the load rate threshold and the frame loss rate is less than the second frame loss rate threshold, no processing may be performed.

In block S209, in response to determining that the load rate is less than the load rate threshold and the frame loss rate is greater than the second frame loss rate threshold and less than the first frame loss rate threshold, the parameter adjustment mode is determined as a mode of keeping the clock frequency and/or bandwidth of the mobile terminal unchanged.

In some embodiments, the load rate threshold may be preset in the mobile terminal, and the load rate threshold can be used as a criterion for the acquired load rate of the mobile terminal. Therefore, in the embodiments, after the load rate of the mobile terminal is acquired, the acquired load rate of the mobile terminal can be compared with the load rate threshold, to determine the relationship between the acquired load rate and the load rate threshold. In some embodiments, the first frame loss rate threshold and the second frame loss rate threshold may be preset and stored in the mobile terminal. The first frame loss rate threshold and the second frame loss rate threshold are used as criterions for the acquired frame loss rate of the ultrasonic data in the transmission process of transmitting the ultrasonic data from the ultrasonic receiving module to the ultrasonic proximity-calculating module. Therefore, in the embodiments, after the frame loss rate of the ultrasonic data in the transmission process of transmitting the ultrasonic data from the ultrasonic receiving module to the ultrasonic proximity-calculating module is acquired, the acquired frame loss rate can be compared with the first frame loss rate threshold and the second frame loss rate threshold, to determine the relationship between the acquired frame loss rate and the first frame loss rate threshold and the second frame loss rate threshold. The second frame loss rate is less than the first frame loss rate. For example, the load rate threshold may be 90%, the first frame loss rate threshold may be 5%, and the second frame loss rate threshold may be 1%.

In the embodiments, when it is determined that the load rate is less than the load rate threshold and the frame loss rate is greater than the second frame loss rate threshold and less than the first frame loss rate threshold, this shows that the mobile terminal has a low load rate and the frame loss rate has a small effect on the accuracy of the proximity detection. In this case, the system efficiency of the mobile terminal can be kept unchanged. Therefore, the parameter adjustment mode can be determined as the mode of keeping the clock frequency and/or bandwidth of the mobile terminal unchanged, to ensure each of the frame loss rate and the power consumption of the mobile terminal are within a preset range. When it is determined that the load rate is not less than the load rate threshold and the frame loss rate is greater than the second frame loss rate threshold and less than the first frame loss rate threshold, this shows that the mobile terminal has a high load rate and a relatively low frame loss rate. In this case, if the system efficiency is reduced, the load of the mobile terminal will be increased rapidly, which would cause the mobile terminal to have a high load and even cause the mobile terminal to be stuck. Therefore, when it is determined that the load rate is not less than the load rate threshold and the frame loss rate is greater than the second frame loss rate threshold and less than the first frame loss rate threshold, no processing may be performed.

In block S210, an ultrasonic signal is transmitted by the ultrasonic transmitting module, and the ultrasonic signal, that is returned after the transmitted ultrasonic signal is reflected by an object, is received by the ultrasonic receiving module.

In some embodiments, the mobile terminal may be configured for proximity detection. Specifically, the mobile terminal further includes the ultrasonic transmitting module and the ultrasonic receiving module. The mobile terminal may transmit an ultrasonic signal through the ultrasonic transmitting module, and receive, through the ultrasonic receiving module, the ultrasonic signal that is returned after the transmitted ultrasonic signal is reflected by an object.

In block S211, attribute values of the ultrasonic signal in a transmission process of transmitting the ultrasonic signal from the ultrasonic transmitting module to the ultrasonic receiving module are acquired, and a Doppler-effect dependent area difference and a Doppler-effect dependent area sum of the ultrasonic signal in the transmission process are calculated based on the attribute values.

In some embodiments, after the mobile terminal receives the ultrasonic signal through the ultrasonic receiving device, the attribute values of the ultrasonic signal in the transmission process can be acquired. And the Doppler-effect dependent area difference and the Doppler-effect dependent area sum of the ultrasonic signal in the transmission process can be calculated based on the attribute values. The transmission process may include a process of transmitting the ultrasonic signal and a process of receiving the ultrasonic signal. The attribute values may include: a transmit frequency of the ultrasonic signal transmitted by the ultrasonic transmitter, an amplitude of the transmitted ultrasonic signal, and a transmit time at which the ultrasonic signal is transmitted by the ultrasonic transmitting device; and a frequency range of the ultrasonic signal received by the ultrasonic receiving device, an amplitude of the received ultrasonic signal, and a receive time at which the ultrasonic signal is received by the ultrasonic receiving device, etc., which are not limited here.

In block S212, a relative movement state between the mobile terminal and the object is determined according to the Doppler-effect dependent area difference and the Doppler-effect dependent area sum.

In some embodiments, after the mobile terminal acquires the Doppler-effect dependent area difference and the Doppler-effect dependent area sum, based on which, the relative movement state between the mobile terminal and the object is determined. According to the relative movement state between the mobile terminal and the object, a display screen of the mobile terminal is controlled to be turned on or off, thereby improving the accuracy and stability of the state control of the display screen, so that the power consumption of the mobile terminal can be effectively reduced, and the radiation caused by the turned-on screen to the user's face when the display screen is close to the user's face can be reduced.

In the method for processing frame loss of an ultrasonic wave provided in the embodiments, multiple frames of the ultrasonic data of an ultrasonic wave are continuously received by the ultrasonic receiving module, and multiple tags are added respectively to the multiple frames of the ultrasonic data, with each of the multiple frames of the ultrasonic data corresponding to one of the multiple tags. The multiple frames of the ultrasonic data that carry the multiple tags are transmitted to the ultrasonic proximity-calculating Module. The number of the tags received by the ultrasonic proximity-calculating module is acquired. The frame loss rate of the ultrasonic data in the transmission process of transmitting the ultrasonic data from the ultrasonic receiving module to the ultrasonic proximity-calculating module is calculated based on the number of the tags received by the ultrasonic proximity-calculating module and the total number of the multiple tags. The usage rate of the central processing unit of the mobile terminal and the usage rate of the memory of the mobile terminal are acquired. The load rate of the mobile terminal is determined based on the usage rate of the central processing unit and the usage rate of the memory. When the load rate is less than the load rate threshold and the frame loss rate is greater than the first frame loss rate threshold, the parameter adjustment mode is determined as the mode of increasing the clock frequency and/or bandwidth of the mobile terminal. When the load rate is less than the load rate threshold and the frame loss rate is less than the second frame loss rate threshold, the parameter adjustment mode is determined as the mode of reducing the clock frequency and/or bandwidth of the mobile terminal. The second frame loss rate threshold is less than the first frame loss rate threshold. When the load rate is less than the load rate threshold and the frame loss rate is greater than the second frame loss rate threshold and less than the first frame loss rate threshold, the parameter adjustment mode is determined as the mode of keeping the clock frequency and/or bandwidth of the mobile terminal unchanged. The ultrasonic signal is transmitted by the ultrasonic transmitting module, and the returned ultrasonic signal, that is returned after the ultrasonic signal is reflected by the object, is received by the ultrasonic receiving module. The attribute values of the ultrasonic signal in the transmission process of transmitting the ultrasonic signal from the ultrasonic transmitting module to the ultrasonic receiving module are acquired, and the Doppler-effect dependent area difference and the Doppler-effect dependent area sum of the ultrasonic signal in the transmission process are calculated based on the attribute values. The relative movement state between the mobile terminal and the object is determined according to the Doppler-effect dependent area difference and the Doppler-effect dependent area sum. Compared with the method for processing frame loss of an ultrasonic wave shown in FIG. 2, in the embodiments, the frame loss rate is acquired by adding tags to each frame of the ultrasonic data, to improve the accuracy of the acquired frame loss rate. In addition, the load rate of the mobile terminal is acquired according to the usage rate of the central processing unit and the usage rate of the memory, to improve the accuracy of the acquired load rate. Furthermore, in the embodiments, the parameter adjustment mode is determined by determining the relationship between the acquired load rate and the load rate threshold and the relationship between the acquired frame loss rate and the frame loss rate threshold, to improve the accuracy of the determined parameter adjustment mode.

Referring to FIG. 5, a structural block diagram of an apparatus 200 for processing frame loss of an ultrasonic wave provided in the embodiments of the present disclosure is illustrated. The apparatus 200 for processing frame loss of an ultrasonic wave is applied to the above-mentioned mobile terminal. The mobile terminal includes the ultrasonic receiving module and the ultrasonic proximity-calculating module. The block diagram shown in FIG. 5 will be described below. The apparatus 200 for processing frame loss of an ultrasonic wave includes an ultrasonic data transmitting module 210, a data acquiring module 220, and a parameter adjustment mode determining module 230.

The ultrasonic data transmitting module 210 is configured to receive, by the ultrasonic receiving module, ultrasonic data of the ultrasonic wave, and transmit the received ultrasonic data to the ultrasonic proximity-calculating module. Further, the ultrasonic data transmitting module 210 includes an ultrasonic data receiving sub-module and an ultrasonic data transmitting sub-module.

The ultrasonic data receiving sub-module is configured to continuously receive, through the ultrasonic receiving module, multiple frames of the ultrasonic data of the ultrasonic wave, and add multiple tags respectively to the multiple frames of the ultrasonic data, with each of the multiple frames of the ultrasonic data corresponding to one of the multiple tags.

The ultrasonic data transmitting sub-module is configured to transmit the multiple frames of the ultrasonic data that carry the multiple tags to the ultrasonic proximity-calculating module.

The data acquiring module 220 is configured to acquire a load rate of the mobile terminal, and acquire a frame loss rate of the ultrasonic data in a transmission process of transmitting the ultrasonic data from the ultrasonic receiving module to the ultrasonic proximity-calculating module. Further, the data acquiring module 220 includes a tag number acquiring sub-module and a frame loss rate acquiring sub-module.

The tag number acquiring sub-module is configured to acquire the number of the tags received by the ultrasonic proximity-calculating module.

The frame loss rate acquiring sub-module is configured to calculate, based on the number of the tags received by the ultrasonic proximity-calculating module and the total number of the multiple tags, the frame loss rate of the ultrasonic data in the transmission process of transmitting the ultrasonic data from the ultrasonic receiving module to the ultrasonic proximity-calculating module.

Further, the data acquiring module 220 includes a usage rate acquiring sub-module and a load rate acquiring sub-module.

The usage rate acquiring sub-module is configured to acquire a usage rate of a central processing unit of the mobile terminal, and acquire a usage rate of a memory of the mobile terminal.

The load rate acquiring sub-module is configured to acquire, based on the usage rate of the central processing unit and the usage rate of the memory, the load rate of the mobile terminal.

The parameter adjustment mode determining module 230 is configured to determine, based on the load rate and the frame loss rate, a parameter adjustment mode, and adjust, based on the determined parameter adjustment mode, system efficiency of the mobile terminal, to cause the frame loss rate to be less than a target frame loss rate. Further, the parameter adjustment mode determining module 230 includes a parameter increasing sub-module, a parameter reducing sub-module and a parameter keeping sub-module.

The parameter increasing sub-module is configured to determine the parameter adjustment mode as a mode of increasing a clock frequency and/or a bandwidth of the mobile terminal, in response to determining that the load rate is less than a load rate threshold and the frame loss rate is greater than a first frame loss rate threshold.

The parameter reducing sub-module is configured to determine the parameter adjustment mode as a mode of reducing the clock frequency and/or the bandwidth of the mobile terminal, in response to determining that the load rate is less than the load rate threshold and the frame loss rate is less than a second frame loss rate threshold, where the second frame loss rate threshold is less than the first frame loss rate threshold.

The parameter keeping sub-module is configured to determine the parameter adjustment mode as a mode of keeping the clock frequency and/or the bandwidth of the mobile terminal unchanged when the load rate is less than the load rate threshold and the frame loss rate is greater than the second frame loss rate threshold and less than the first frame loss rate threshold.

Further, the mobile terminal further includes an ultrasonic transmitting module. The apparatus 200 for processing frame loss of an ultrasonic wave further includes an ultrasonic signal receiving module, an attribute value acquiring module and a relative movement state determining module.

The ultrasonic signal receiving module is configured to transmit, through the ultrasonic transmitting module, an ultrasonic signal, and receive, through the ultrasonic receiving module, the ultrasonic signal that is returned after the transmitted ultrasonic signal is reflected by an object.

The attribute value acquiring module is configured to acquire attribute values of the ultrasonic signal in the transmission process of transmitting the ultrasonic signal from the ultrasonic transmitting module to the ultrasonic receiving module, and calculate, based on the attribute values, a Doppler-effect dependent area difference and a Doppler-effect dependent area sum of the ultrasonic signal in the transmission process.

The relative movement state determining module is configured to determine a relative movement state between the mobile terminal and the object according to the Doppler-effect dependent area difference and the Doppler-effect dependent area sum.

Those skilled in the art can clearly understand that, for the convenience and conciseness of the description, the specific working process of the apparatus and the modules thereof described above can be referred to the corresponding process in the above method embodiments, which will not be repeated here.

In the embodiments of the present disclosure, the coupling between the modules may be electrical, mechanical or in other forms.

In addition, the functional modules in the embodiments of the present disclosure may be integrated into one processing module, or each module may exist alone physically, or two or more than two modules may be integrated into one module. The above integrated modules may be implemented in hardware or software.

Referring to FIG. 6, a structural block diagram of a mobile terminal 100 provided in the embodiments of the present disclosure is illustrated. The mobile terminal 100 may be an electronic device that can run application programs, such as a smart phone, a tablet computer, or an e-book. The mobile terminal 100 may include one or more of: a processor 110, a memory 120, a display screen 130, an ultrasonic proximity-calculating module 140, an ultrasonic receiving module 150, and one or more application programs. The one or more application programs may be stored in the memory 120, and configured to be executed by one or more processors 110 to cause the method described in the above method embodiments to be implemented.

The processor 110 may include one or more processing cores. The processor 110 uses various interfaces and lines to connect various parts of the entire mobile terminal 100, and perform various functions and processing data of the mobile terminal 100 by running or executing instructions, programs, code sets, or instruction sets stored in the memory 120, and invoking data stored in the memory 120. Optionally, the processor 110 may be implemented in at least one of a Digital Signal Processing (DSP), a Field-Programmable Gate Array (FPGA), and a Programmable Logic Array (PLA). The processor 110 may be integrated with one of a Central Processing Unit (CPU), a Graphics Processing Unit (GPU), and a modem, or a combination thereof. The CPU is mainly configured to process the operating system, user interface, and application programs. The GPU is configured to render and draw the display contents. The modem is configured to process wireless communication. It is understandable that the above modem may not be integrated into the processor 110, and may be implemented by a separated communication chip.

The memory 120 may include a Random Access Memory (RAM), or a Read-Only Memory (ROM). The memory 120 may be configured to store instructions, programs, codes, code sets or instruction sets. The memory 120 may include a program storage area and a data storage area. The program storage area may store instructions for implementing the operating system, instructions for implementing at least one function (such as touch function, sound playback function, and image playback function), and instructions for implementing the method embodiments, etc. The storage data area may also store data created by the mobile terminal 100 during use (such as phone book, audio and video data, chat record data).

The display screen 130 is configured to display information input by the user, information provided to the user, and various graphical user interfaces of the mobile terminal 100. These graphical user interfaces can be composed of graphics, text, icons, numbers, videos, and any combination thereof. In an implementation, the display screen 130 may be a Liquid Crystal Display (LCD) or an Organic Light-Emitting Diode (OLED), which is not limited here.

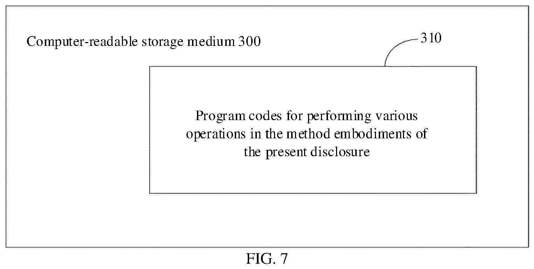

Referring to FIG. 7, a structural block diagram of a computer-readable storage medium provided in the embodiments of the present disclosure is illustrated. The computer-readable medium 300 stores program codes therein, and the program codes can be invoked by a processor to perform the method described in the above method embodiments.

The computer-readable storage medium 300 may be an electronic memory, such as flash memory, Electrically Erasable Programmable Read Only Memory (EEPROM), EPROM, hard disk, or ROM. Optionally, the computer-readable storage medium 300 includes a non-transitory computer-readable storage medium. The computer-readable storage medium 300 has a storage space for storing the program codes 310 configured for performing any method operations in the above methods. These program codes can be read from or written into one or more computer program products. The program codes 310 can be compressed, for example, in a suitable form.

In summary, in the method and apparatus for processing frame loss of an ultrasonic wave, mobile terminal, and storage medium provided in the embodiments of the present disclosure, the ultrasonic data is received by the ultrasonic receiving module, and the received ultrasonic data is transmitted to the ultrasonic proximity-calculating module. The load rate of the mobile terminal is acquired, and the frame loss rate of the ultrasonic data in the transmission process of transmitting the ultrasonic data from the ultrasonic receiving module to the ultrasonic receiving module is acquired. The parameter adjustment mode is determined based on the load rate and the frame loss rate, and the system efficiency of the mobile terminal is adjusted based on the determined parameter adjustment mode, so as to cause the frame loss rate to be less than the target frame loss rate. In this way, the system efficiency is intelligently adjusted based on the load rate and the frame loss rate of the mobile terminal, to reduce the frame loss rate, thereby improving the user experience.

Finally, it should be noted that the above embodiments only illustrate the technical solutions of the present disclosure, which should not be understood as limiting. Although the present disclosure is described in detail with reference to the above embodiments, those of ordinary skill in the art should understand that, the technical solutions recited in the above embodiments may be modified, or some of the technical features thereof may be equivalently replaced, without departing from the spirit and scope of the technical solutions of the embodiments of the present disclosure.

**Claims**

1. A method for processing frame loss of an ultrasonic wave, the method being applied to a mobile terminal comprising an ultrasonic receiving module and an ultrasonic proximity-calculating module, and the method comprising:

   receiving, by the ultrasonic receiving module, ultrasonic data of the ultrasonic wave and transmitting the received ultrasonic data to the ultrasonic proximity-calculating module;
   acquiring a load rate of the mobile terminal, and acquiring a frame loss rate of the ultrasonic data in a transmission process of transmitting the ultrasonic data from the ultrasonic receiving module to the ultrasonic proximity-calculating module; and
determining, based on the load rate and the frame loss rate, a parameter adjustment mode, and adjusting, based on the determined parameter adjustment mode, system efficiency of the mobile terminal, to cause the frame loss rate to be less than a target frame loss rate.

2. The method as claimed in claim 1, wherein the determining, based on the load rate and the frame loss rate, a parameter adjustment mode comprises: determining the parameter adjustment mode as a mode of increasing a clock frequency and/or a bandwidth of the mobile terminal, in response to determining that the load rate is less than a load rate threshold and the frame loss rate is greater than a first frame loss rate threshold.

3. The method as claimed in claim 2, wherein the determining, based on the load rate and the frame loss rate, a parameter adjustment mode comprises: outputting a prompt message, in response to determining that the load rate is not less than the load rate threshold and the frame loss rate is greater than the first frame loss rate threshold, wherein the prompt message is configured to prompt a user to adjust running of the mobile terminal, to reduce the load rate of the mobile terminal.

4. The method as claimed in claim 2, wherein the determining, based on the load rate and the frame loss rate, a parameter adjustment mode comprises: determining the parameter adjustment mode as a mode of reducing the clock frequency and/or the bandwidth of the mobile terminal, in response to determining that the load rate is less than the load rate threshold and the frame loss rate is less than a second frame loss rate threshold, wherein the second frame loss rate threshold is less than the first frame loss rate threshold.

5. The method as claimed in claim 4, wherein the determining, based on the load rate and the frame loss rate, a parameter adjustment mode comprises: determining the parameter adjustment mode as a mode of keeping the clock frequency and/or the bandwidth of the mobile terminal unchanged, in response to determining that the load rate is less than the load rate threshold and the frame loss rate is greater than the second frame loss rate threshold and less than the first frame loss rate threshold.

6. The method as claimed in any one of claims 1-5, wherein the receiving, by the ultrasonic receiving module, ultrasonic data of the ultrasonic wave and transmitting the received ultrasonic data to the ultrasonic proximity-calculating module comprises:

continuously receiving, by the ultrasonic receiving module, a plurality of frames of the ultrasonic data of the ultrasonic wave, and adding a plurality of tags respectively to the plurality of frames of the ultrasonic data, with each of the plurality of frames of the ultrasonic data corresponding to one of the plurality of tags; and transmitting the plurality of frames of the ultrasonic data that carry the plurality of tags to the ultrasonic proximity-calculating module; and

wherein the acquiring a frame loss rate of the ultrasonic data in a transmission process of transmitting the ultrasonic data from the ultrasonic receiving module to the ultrasonic proximity-calculating module comprises:

acquiring the number of the tags received by the ultrasonic proximity-calculating module; and calculating, based on the number of the tags received by the ultrasonic proximity-calculating module and a total number of the plurality of tags, the frame loss rate of the ultrasonic data in the transmission process of transmitting the ultrasonic data from the ultrasonic receiving module to the ultrasonic proximity-calculating module.

7. The method as claimed in claim 6, wherein the plurality of tags comprise any one of a numerical tag, a character tag, a letter tag, and an image tag, or a combination thereof.

8. The method as claimed in any one of claims 1-7, wherein the acquiring a load rate of the mobile terminal comprises:

acquiring a usage rate of a central processing unit of the mobile terminal, and acquiring a usage rate of a memory of the mobile terminal; and acquiring, based on the usage rate of the central processing unit and the usage rate of the memory, the load rate of the mobile terminal.

9. The method as claimed in any one of claims 1-8, wherein the mobile terminal further comprises an ultrasonic transmitting module, and after the parameter adjustment mode is determined based on the load rate and the frame loss rate and the system efficiency of the mobile terminal is adjusted based on the determined parameter adjustment mode, the method further comprises:

transmitting, by the ultrasonic transmitting module, an ultrasonic signal, and receiving, by the ultrasonic receiving module, the ultrasonic signal that is returned after the transmitted ultrasonic signal is reflected by an object;

acquiring attribute values of the ultrasonic signal in a transmission process of transmitting the ultrasonic signal from the ultrasonic transmitting module to the ultrasonic receiving module, and calculating, based on the attribute values, a Doppler-effect dependent area difference and a Doppler-effect dependent area sum of the ultrasonic signal in the transmission process; and determining a relative movement state between the mobile terminal and the object, according to the Doppler-effect dependent area difference and the Doppler-effect dependent area sum.

10. The method as claimed in claim 9, wherein the attribute values comprise a transmit frequency of the ultrasonic signal transmitted by the ultrasonic transmitting module and a frequency range of the ultrasonic signal received by the ultrasonic receiving module.

11. The method as claimed in claim 9 or 10, wherein the attribute values further comprise an amplitude of the ultrasonic signal transmitted by the ultrasonic transmitting module and an amplitude of the ultrasonic signal received by the ultrasonic receiving module.

12. The method as claimed in any one of claims 9-11, wherein the attribute values further comprise a transmit time at which the ultrasonic transmitting module transmits the ultrasonic signal and a receive time at which the ultrasonic receiving module receives the ultrasonic signal.

13. The method as claimed in any one of claims 9-12, wherein after the relative movement state between the mobile terminal and the object is determined according to the Doppler-effect dependent area difference and the Doppler-effect dependent area sum, the method further comprises:
controlling a display screen of the mobile terminal to be turned on or off, according to the relative movement state between the mobile terminal and the object.

14. The method as claimed in any one of claims 1-13, wherein the mobile terminal is provided with a switch, the receiving, by the ultrasonic receiving module, ultrasonic data, and transmitting the received ultrasonic data to the ultrasonic proximity-calculating module comprises:

enabling the ultrasonic receiving module to receive the ultrasonic data of the ultrasonic wave, in response to a touch operation performed on the switch; and
receiving, by the ultrasonic receiving module, the ultrasonic data, and transmitting the received ultrasonic data to the ultrasonic proximity-calculating module.

15. The method as claimed in claim 14, wherein the switch is a virtual button or a virtual control.

16. The method as claimed in any one of claims 1-15, wherein the acquiring a frame loss rate of the ultrasonic data in a transmission process of transmitting the ultrasonic data from the ultrasonic receiving module to the ultrasonic proximity-calculating module comprises:
acquiring the frame loss rate of the ultrasonic data within a preset period of time in the transmission process of transmitting the ultrasonic data from the ultrasonic receiving module to the ultrasonic proximity-calculating module.

17. The method as claimed in any one of claims 1-16, wherein the target frame loss rate is set well in factory, or the target frame loss rate is set based on an environment where the mobile terminal is located.

18. An apparatus for processing frame loss of an ultrasonic wave, the apparatus being applied to a mobile terminal comprising an ultrasonic receiving module and an ultrasonic proximity-calculating module, and the apparatus comprising:

an ultrasonic data transmitting module, configured to receive, through the ultrasonic receiving module, ultrasonic data of the ultrasonic wave, and transmit the received ultrasonic data to the ultrasonic proximity-calculating module;
a data acquiring module, configured to acquire a load rate of the mobile terminal, and acquire a frame loss rate of the ultrasonic data in a transmission process of transmitting the ultrasonic data from the ultrasonic receiving module to the ultrasonic proximity-calculating module; and
a parameter adjustment mode determining module, configured to determine, based on the load rate and the frame loss rate, a parameter adjustment mode, and adjust, based on the determined parameter adjustment mode, system efficiency of the mobile terminal, to cause the frame loss rate to be less than a target frame loss rate.

19. A mobile terminal, comprising an ultrasonic transmitting module, an ultrasonic proximity-calculating module, a memory, and a processor, wherein the ultrasonic transmitting module, the ultrasonic proximity-calculating module, and the memory are coupled to the processor, the memory stores instructions therein, and the instructions, when being executed by the processor, cause the processor to implement the method as claimed in any one of claims 1-17.

20. A computer-readable storage medium, having program codes stored thereon, wherein the program codes are configured to be invoked by a processor to implement the method as claimed in any one of claims 1-17.

FIG. 1

FIG. 2

the ultrasonic receiving module receives ultrasonic data, and transmits the ultrasonic data to the ultrasonic proximity-calculating module ⌐∽S101

a load rate of the mobile terminal is acquired, and a frame loss rate of the ultrasonic data in a transmission process of transmitting the ultrasonic data from the ultrasonic receiving module to the ultrasonic proximity-calculating module is acquired ⌐∽S102

a parameter adjustment mode is determined based on the load rate and the frame loss rate, and the system efficiency of the mobile terminal is adjusted based on the determined parameter adjustment mode, to cause the frame loss rate to be less than a target frame loss rate ⌐∽S103

FIG. 3

| | |
|---|---|
| multiple frames of ultrasonic data are continuously received by the ultrasonic receiving module, and multiple tags are added respectively to the multiple frames of the ultrasonic data, where each of the multiple frames of the ultrasonic data corresponds to one of the multiple tags | S201 |
| the multiple frames of the ultrasonic data that carry the multiple tags are transmitted to the ultrasonic proximity-calculating module | S202 |
| the number of the tags received by the ultrasonic proximity-calculating module is acquired | S203 |
| a frame loss rate of the ultrasonic data in the transmission process of transmitting the ultrasonic data from the ultrasonic receiving module to the ultrasonic proximity-calculating module is calculated, based on the number of the tags received by the ultrasonic proximity-calculating module and the total number of the multiple tags | S204 |
| a usage rate of a central processing unit of the mobile terminal and a usage rate of a memory of the mobile terminal are acquired | S205 |
| a load rate of the mobile terminal is determined based on the usage rate of the central processing unit and the usage rate of the memory | S206 |
| in response to determining that the load rate is less than a load rate threshold and the frame loss rate is greater than a first frame loss rate threshold, a parameter adjustment mode is determined as a mode of increasing a clock frequency and/or a bandwidth of the mobile terminal | S207 |
| in response to determining that the load rate is less than the load rate threshold and the frame loss rate is less than a second frame loss rate threshold, the parameter adjustment mode is determined as a mode of reducing the clock frequency and/or bandwidth of the mobile terminal, where the second frame loss rate threshold is less than the first frame loss rate threshold | S208 |
| in response to determining that the load rate is less than the load rate threshold and the frame loss rate is greater than the second frame loss rate threshold and less than the first frame loss rate threshold, the parameter adjustment mode is determined as a mode of keeping the clock frequency and/or bandwidth of the mobile terminal unchanged | S209 |
| an ultrasonic signal is transmitted by the ultrasonic transmitting module, and the ultrasonic signal, that is returned after the transmitted ultrasonic signal is reflected by an object, is received by the ultrasonic receiving module | S210 |
| attribute values of the ultrasonic signal in a transmission process of transmitting the ultrasonic signal from the ultrasonic transmitting module to the ultrasonic receiving module are acquired, and a Doppler-effect dependent area difference and a Doppler-effect dependent area sum of the ultrasonic signal in the transmission process are calculated based on the attribute values | S211 |
| a relative movement state between the mobile terminal and the object is determined according to the Doppler-effect dependent area difference and the Doppler-effect dependent area sum | S212 |

FIG. 4

Apparatus for processing frame loss of an ultrasonic wave 200

Ultrasonic data transmitting module 210

Data acquiring module 220

Parameter adjustment mode determining module 230

FIG. 5

Mobile terminal 100

Ultrasonic proximity-calculating module 140

Ultrasonic receiving module 150

Processor 110

Memory 120

Display screen 130

FIG. 6

Computer-readable storage medium 300

310

Program codes for performing various
operations in the method embodiments of
the present disclosure

FIG. 7

## INTERNATIONAL SEARCH REPORT

| International application No. |
| --- |
| **PCT/CN2020/113281** |

| A. | CLASSIFICATION OF SUBJECT MATTER |
| --- | --- |
| | H04W 24/00(2009.01)i |

According to International Patent Classification (IPC) or to both national classification and IPC

| B. | FIELDS SEARCHED |
| --- | --- |

Minimum documentation searched (classification system followed by classification symbols)

    H04W

Documentation searched other than minimum documentation to the extent that such documents are included in the fields searched

Electronic data base consulted during the international search (name of data base and, where practicable, search terms used)

    CNABS, CNTXT, CNKI, VEN, USTXT, EPTXT, WOTXT: OPPO, 欧珀, 手机, 接近, 靠近, 检测, 超声, 丢, 帧, 包, 负载, 负荷, 载荷, 线程, 进程, 降低, 减少, 减小, between, threaded, process, ultrasonic, frame, packet, loss, CPU, memory, load, rate, fall, low, reduce, close, near, phone , detect

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 110601771 A (OPPO (CHONGQING) INTELLIGENT TECHNOLOGY CO., LTD.) 20 December 2019 (2019-12-20) description, paragraphs [0025]-[0094] | 1-20 |
| A | CN 1331552 A (NOKIA MOBILE PHONES LIMITED) 16 January 2002 (2002-01-16) description page 1 lines 5-24, page 4 lines 2-18, figures 1-3 | 1-20 |
| A | CN 109117271 A (TP-LINK TECHNOLOGIES CO., LTD.) 01 January 2019 (2019-01-01) description, paragraphs [0067]-[0071] | 1-20 |
| A | CN 105094662 A (LG ELECTRONICS INC.) 25 November 2015 (2015-11-25) entire document | 1-20 |
| A | CN 109254684 A (OPPO GUANGDONG MOBILE COMMUNICATIONS CO., LTD.) 22 January 2019 (2019-01-22) | 1-20 |
| A | CN 102436400 A (DAWNING INFORMATION INDUSTRY CO., LTD.) 02 May 2012 (2012-05-02) entire document | 1-20 |
| A | US 2009197615 A1 (KIM JOO MIN et al.) 06 August 2009 (2009-08-06) entire document | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 November 2020** | **24 November 2020** |

| Name and mailing address of the ISA/CN | Authorized officer |
| --- | --- |
| **China National Intellectual Property Administration (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2020/113281**

| Patent document cited in search report | | | Publication date (day/month/year) | Patent family member(s) | | | Publication date (day/month/year) |
|---|---|---|---|---|---|---|---|
| CN | 110601771 | A | 20 December 2019 | None | | | |
| CN | 1331552 | A | 16 January 2002 | HK | 1043467 | A1 | 13 September 2002 |
| | | | | CN | 1197422 | C | 13 April 2005 |
| | | | | DE | 60125874 | D1 | 22 February 2007 |
| | | | | EP | 1174732 | B1 | 10 January 2007 |
| | | | | US | 6542436 | B1 | 01 April 2003 |
| | | | | DE | 60125874 | T2 | 18 October 2007 |
| | | | | EP | 1174732 | A2 | 23 January 2002 |
| | | | | EP | 1174732 | A3 | 11 December 2002 |
| | | | | JP | 2002111852 | A | 12 April 2002 |
| CN | 109117271 | A | 01 January 2019 | None | | | |
| CN | 105094662 | A | 25 November 2015 | CN | 105094662 | B | 14 April 2020 |
| | | | | FR | 3021425 | A1 | 27 November 2015 |
| | | | | EP | 2947859 | B1 | 04 July 2018 |
| | | | | US | 2015341482 | A1 | 26 November 2015 |
| | | | | EP | 3410678 | A1 | 05 December 2018 |
| | | | | FR | 3021425 | B1 | 12 October 2018 |
| | | | | KR | 20150134972 | A | 02 December 2015 |
| | | | | EP | 2947859 | A1 | 25 November 2015 |
| | | | | IN | 201501732 | I3 | 08 July 2016 |
| CN | 109254684 | A | 22 January 2019 | None | | | |
| CN | 102436400 | A | 02 May 2012 | None | | | |
| US | 2009197615 | A1 | 06 August 2009 | US | 8195220 | B2 | 05 June 2012 |
| | | | | WO | 2009096643 | A1 | 06 August 2009 |
| | | | | KR | 20090100319 | A | 23 September 2009 |
| | | | | KR | 20090100320 | A | 23 September 2009 |
| | | | | KR | 20100029110 | A | 15 March 2010 |
| | | | | KR | 101163856 | B | 09 July 2012 |
| | | | | KR | 20090100194 | A | 23 September 2009 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910882078